# FASCICULE DE BREVET EUROPEEN

(11) **EP 2 951 008 B1**
(45) Date de publication et mention de la délivrance du brevet: **30.11.2016**
(21) Numéro de dépôt: 14702530.8
(22) Date de dépôt: 29.01.2014
(51) Int. Cl.: B29D 99/00, B29B 11/16, C04B 35/80, D03D 25/00, D03D 11/02, D06M 10/06, D06M 101/40, C04B 35/571, C04B 35/622, B29C 70/24

(54) **PROCEDE DE FABRICATION D'UNE STRUCTURE ALVEOLAIRE DE FORME COURBEE EN MATERIAU COMPOSITE**
VERFAHREN ZUR HERSTELLUNG EINER GEKRÜMMTEN WABENSTRUKTUR AUS VERBUNDSTOFF
METHOD FOR PRODUCING A CURVED HONEYCOMB STRUCTURE MADE FROM COMPOSITE MATERIAL

(30) Priorité: 29.01.2013 FR 1350722
(43) Date de publication de la demande: 09.12.2015
(73) Titulaire: HERAKLES, 33185 Le Haillan (FR)
(72) Inventeur: FOUQUET, Stéphanie, F-33160 Saint Medard en Jalles (FR); JIMENEZ, Sébastien, F-33000 Bordeaux (FR); PHILIPPE, Eric, F-33700 Merignac (FR); CHARLEUX, François, F-33000 Bordeaux (FR)
(74) Mandataire: Desormiere, Pierre-Louis
(86) Numéro de dépôt international: PCT/EP2014/051697
(87) Numéro de publication internationale: WO 2014/118215

(56) Documents cités:
- EP-A1- 0 573 353
- FR-A1- 2 923 748
- US-A- 2 668 327
- US-A1- 2009 142 980

## Description

### Arrière-plan de l'invention

La présente invention se rapporte au domaine général des structures alvéolaires ou corps cellulaires utilisés par exemple dans des panneaux d'atténuation acoustique destinés à réduire les bruits produits dans les turbines à gaz ou chambre de combustion aéronautiques ou dans des éléments structuraux d'allègement (raidisseur) d'un ensemble de type sandwich.

Ces panneaux sont typiquement constitués d'une paroi de surface multiperforée perméable aux ondes acoustiques que l'on souhaite atténuer et d'une paroi pleine réfléchissante, une structure alvéolaire ou corps cellulaire, tel qu'un nid d'abeille, étant disposé entre ces deux parois. De façon bien connue, de tels panneaux forment des résonateurs de type Helmholtz qui permettent d'atténuer dans une certaine gamme de fréquences les ondes acoustiques produites dans le conduit.

La structure alvéolaire peut être réalisée en matériau métallique comme décrits dans les documents US 5 912 442 et GB 2 314 526 ou en matériau composite, c'est-à-dire un matériau comprenant un renfort fibreux densifié par une matrice, qui est plus léger qu'un matériau métallique.

Le document US 5 415 715 divulgue, conformément au préambule de la revendication 1, la réalisation de structures en nid d'abeilles réalisées en matériau composite à partir d'une structure fibreuse déployable. Dans ce document, la structure fibreuse peut être notamment réalisée en empilant et en liant en quinconce des strates bidimensionnelles de tissu de manière à former une texture. La liaison entre les strates est réalisée le long de bandes parallèles disposées en quinconce et formées par collage ou couture. L'empilement des strates est ensuite découpé en tronçons, chaque tronçon étant ensuite étiré en direction normale aux faces des strates pour donner, par déformation, des structures alvéolaires.

Le document US 2009/0142980 divulgue la réalisation de structures en nid d'abeilles en matériau composite à partir de structures fibreuses obtenues par tissage.

Selon une variante de réalisation décrite dans le document US 5 415 715, des strates bidimensionnelles sont superposées et aiguilletées afin de former une texture. Des découpes en forme de fentes sont ensuite réalisées en quinconce dans la texture, par exemple au jet d'eau ou laser, leurs dimensions et localisations définissant les dimensions et formes des alvéoles. Après réalisation des découpes, la texture est étirée en direction perpendiculaire aux plans des découpes pour donner, par déformation, une structure alvéolaire.

Cependant, si ce type de structure fibreuse est bien adaptée pour la réalisation de structures alvéolaires planes, son utilisation s'avère plus délicate lorsque l'on souhaite réaliser des structures alvéolaires de forme courbée. En effet, la déformation suivant une forme courbe engendre des zones de tension dans la structure fibreuse. Lorsque la structure fibreuse est réalisée à partir d'un empilement de strates bidimensionnelles comme décrit ci-avant, les strates peuvent se délier au voisinage de ces zones de tension ou se déformer de façon non uniforme empêchant l'obtention d'une structure alvéolaire régulière.

Par ailleurs, la réalisation de textures fibreuses déployables comme décrites ci-avant requière un nombre d'opérations manuelles importantes qui ne sont pas compatibles avec une production industrielle.

Or, il existe un besoin de disposer d'une solution fiable et économique permettant de fabriquer des structures alvéolaires en matériau composite ayant une forme courbée.

### Objet et résumé de l'invention

A cet effet, la présente invention propose, conformément à la revendication 1, un procédé de fabrication d'une structure alvéolaire courbée.

Ainsi, conformément au procédé de l'invention, on réalise une structure alvéolaire à partir d'une structure fibreuse déployable obtenue par tissage, ce qui permet de lui conférer une tenue mécanique accrue par rapport à une structure déployable obtenue par empilement de strates. La structure fibreuse de l'invention présente une bonne cohésion en tout point et permet d'obtenir aisément une structure alvéolaire uniforme après déploiement, et ce même lorsqu'elle est mise en forme sur un outillage présentant une forme courbée. En réalisant la structure fibreuse par tissage, on minimise les pertes de matières par rapport à une structure obtenue par empilement de strates.

En outre, selon le procédé de l'invention, on obtient une structure alvéolaire dont le renfort tissé comporte des fils de trame et de chaîne formant un angle avec l'axe des cellules, ce qui permet une meilleure déformabilité suivant des formes courbes en réduisant les zones de tension au niveau de la structure fibreuse lors de sa mise en forme.

Selon une caractéristique particulière, la structure fibreuse est tissée en répétant une série de deux plans d'armure successifs comprenant chacun des portions de liaison dans lesquelles au moins un fil de chaîne lie entre eux des fils de trame d'au moins deux couches de fils de trame adjacentes, les portions de liaison étant décalées de deux fils de trame dans une direction parallèle à celle des couches de fils de trame entre chaque série de plans d'armure de manière à orienter les fils de couches de chaîne et les fils de couches de trame dans une direction formant un angle de 45° avec l'axe de chaque cellule, ce qui permet une déformation plus importante de la structure fibreuse lors de son déploiement favorisant ainsi une bonne mise en forme sur une surface gauche.

Selon un deuxième aspect du procédé de l'invention, la structure fibreuse est réalisée par tissage tridimensionnel ou multicouche à armure interlock, ce qui renforce encore la tenue mécanique de la structure fibreuse et, par conséquent, celle de la structure alvéolaire résultante.

Selon un troisième aspect du procédé de l'invention, l'épaisseur des parois des cellules ou alvéoles de la structure alvéolaire à fabriquer est ajustée en fonction du nombre de couches de fils de trame tissées dans les portions de liaison.

La structure fibreuse peut être réalisée à partir de fibres de carbure de silicium tandis que la résine utilisée pour l'imprégnation de la structure fibreuse est une résine précurseur de céramique.

La structure fibreuse peut être également réalisée à partir de fibres de carbone tandis que la résine utilisée pour l'imprégnation de la structure fibreuse est une résine précurseur de carbone de type phénolique.

Selon un quatrième aspect du procédé de l'invention, celui-ci comprend en outre une étape de pyrolyse de la résine pour transformer ladite résine en céramique.

Selon un cinquième aspect du procédé de l'invention, celui-ci comprend en outre une étape de densification de la structure alvéolaire.

Selon un sixième aspect du procédé de l'invention, celui-ci comprend, après l'étape d'imprégnation suivie éventuellement d'un pré-poussage et avant les étapes de déploiement et de polymérisation de la structure fibreuse, une étape de découpe à une ou plusieurs dimensions déterminées de la structure alvéolaire.

Selon un septième aspect du procédé de l'invention, celui-ci comprend une étape de réalisation d'un substrat fibreux par tissage multicouche entre une pluralité de couches de fils de chaîne et une pluralité de couches de fils de trame, le substrat fibreux comportant des zones de déliaison s'étendant dans l'épaisseur du substrat, les zones de déliaison étant espacées les unes des autres par des portions de liaison entre plusieurs couches de fils de trame, le procédé comprenant en outre, après une étape d'imprégnation du substrat fibreux avec une résine précurseur d'un matériau déterminé suivie éventuellement d'un pré-poussage, une étape de découpe d'au moins une bande dans le substrat fibreux de manière à obtenir la structure fibreuse déployable, chaque bande étant découpée avec une largeur déterminée correspondant à la hauteur des cellules à réaliser.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique en perspective d'une structure alvéolaire courbée conformément à un mode de réalisation de l'invention;
- la figure 2 est vue une schématique d'une structure fibreuse déployable conformément à un mode de réalisation de l'invention;
- les figures 3A et 3B sont respectivement des vues agrandies de deux plans successifs d'une armure de tissage d'une structure fibreuse déployable conformément à un mode de réalisation de l'invention;
- la figure 4 est une vue schématique en perspective montrant le déploiement d'une structure fibreuse sur un outillage de conformation;
- les figures 5A et 5B sont respectivement des vues agrandies de deux plans successifs d'une armure de tissage d'une structure fibreuse déployable conformément à un autre mode de réalisation de l'invention;
- la figure 6 est une vue schématique en perspective d'une structure alvéolaire courbée dont les fils de trame et de chaîne sont orientés à 45° par rapport à l'axe des cellules conformément à un autre mode de réalisation de l'invention;
- les figures 7A à 7L montrent des plans d'armure permettant de réaliser une structure fibreuse du même type que la structure fibreuse des figures 3A et 3B mais dont les fils de trame et de chaîne sont orientés à 45° par rapport à l'axe des cellules conformément à un autre mode de réalisation de l'invention;
- les figures 8A à 8D montrent des vues partielles agrandies de plans successifs d'une armure d'une structure fibreuse déployable obtenue par tissage 3D interlock conformément à un autre mode de réalisation de l'invention;
- les figures 9A à 9H montrent des plans d'armure permettant de réaliser une structure fibreuse du même type que la structure fibreuse des figures 8A et 8D mais dont les fils de trame et de chaîne sont orientés à 45° par rapport à l'axe des cellules conformément à un autre mode de réalisation de l'invention;
- les figures 10A à 10D sont des vues partielles agrandies de quatre plans successifs d'une armure de tissage permettant de former une structure fibreuse déployable avec des cellules dont les parois sont constituées par deux couches de fils de chaîne et de trame conformément à un autre mode de réalisation de l'invention.

### Description détaillée d'un mode de réalisation

L'invention s'applique d'une manière générale à la réalisation de structures alvéolaires ou corps cellulaires de type nids d'abeille présentant une forme courbée suivant une ou plusieurs directions et étant réalisés en matériau composite, c'est-à-dire un matériau comprenant un renfort fibreux densifié par une matrice. La structure alvéolaire selon l'invention peut notamment être utilisée dans des systèmes d'atténuation acoustique et/ou comme élément structural d'allègement (raidisseur) dans un ensemble de type sandwich.

La structure alvéolaire de l'invention peut être réalisée plus particulièrement, mais non exclusivement, en matériau composite thermostructural, c'est-à-dire un matériau composite ayant des bonnes propriétés mécaniques et une capacité à conserver ces propriétés à température élevée. Des matériaux composites thermostructuraux typiques sont les matériaux composites carbone/carbone (C/C) formés d'un renfort en fibres de carbone densifié par une matrice en carbone et les matériaux composites à matrice céramique (CMC) formés d'un renfort en fibres réfractaires (carbone ou céramique) densifié par une matrice au moins partiellement céramique. Des exemples de CMC sont les composites C/SiC (renfort en fibres de carbone et matrice en carbure de silicium), les composites C/C-SiC (renfort en fibres de carbone et matrice comprenant une phase carbone, généralement au plus près des fibres, et une phase carbure de silicium) et les composites SiC/SiC (fibres de renfort et matrice en carbure de silicium). Une couche d'interphase peut être interposée entre les fibres de renfort et la matrice pour améliorer la tenue mécanique du matériau.

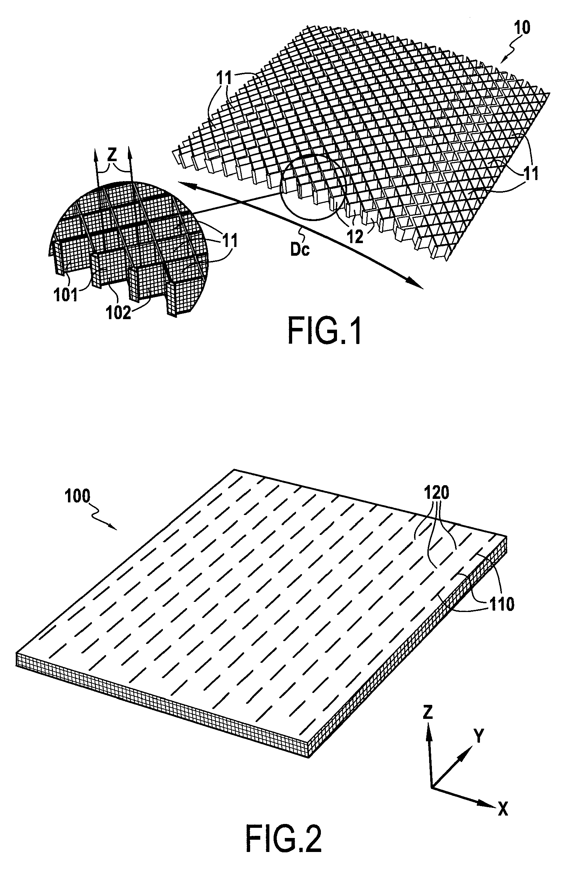

La figure 1 représente une structure alvéolaire 10 qui comporte une pluralité de cellules 11 délimitées par des parois 12, chaque cellule 11 s'étendant verticalement suivant un axe Z et dénommé par la suite « axe de cellule ». Dans l'exemple représenté en figure 1, les cellules 11 présentent une forme de losange. Toutefois, les cellules de la structure alvéolaire selon l'invention peuvent présenter diverses formes géométriques telles que des formes hexagonales, carrées, de type Flexcore®, etc.. La structure alvéolaire 10 présente un forme courbée suivant une direction Dc. Dans l'exemple décrit ici, la structure alvéolaire 10 présente une forme de portion de cylindre. Toutefois, la structure alvéolaire selon l'invention peut présenter d'autres forme comme, par exemple, une forme tronconique et/ou plusieurs courbures dans des directions différentes.

Conformément à l'invention, la fabrication de la structure alvéolaire débute par la formation d'une structure fibreuse déployable destinée à former le renfort fibreux de la structure alvéolaire, la structure fibreuse étant obtenue par tissage multicouche ou tridimensionnel (3D) réalisé au moyen d'un métier à tisser de type jacquard sur lequel on a disposé un faisceau de fils de chaîne en une pluralité de couches de fils, les fils de chaîne étant liés par des fils de trame et inversement.

Dans le texte et sur les dessins, il est mentionné et représenté, par convention et souci de commodité, que ce sont les fils de chaîne qui sont déviés de leurs trajets pour saisir des fils de trame d'une couche de trame ou de plusieurs couches de trame. Toutefois, une inversion des rôles entre chaîne et trame est possible et doit être considérée comme couverte par la présente invention.

La figure 2 représente une structure fibreuse déployable 100 destinée à constituer le renfort fibreux de la structure alvéolaire 10. La structure 100 comporte une pluralité de zones de déliaison 110 s'étendant dans l'épaisseur de la structure fibreuse et étant espacées les unes des autres par des portions de liaison 120. Comme décrit ci-après en détail, les portions de liaison correspondent à des parties de la structure fibreuse où les couches de fils de trame sont liées entre elles par des fils de chaîne, ces portions correspondant ensuite aux parties jointives entre les parois des cellules de la structure alvéolaire.

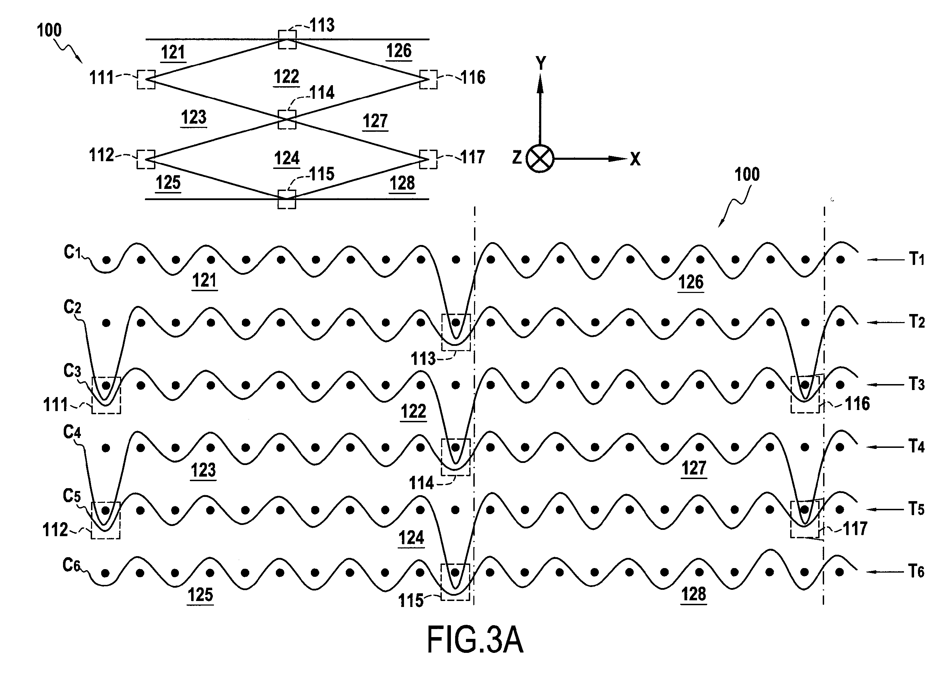

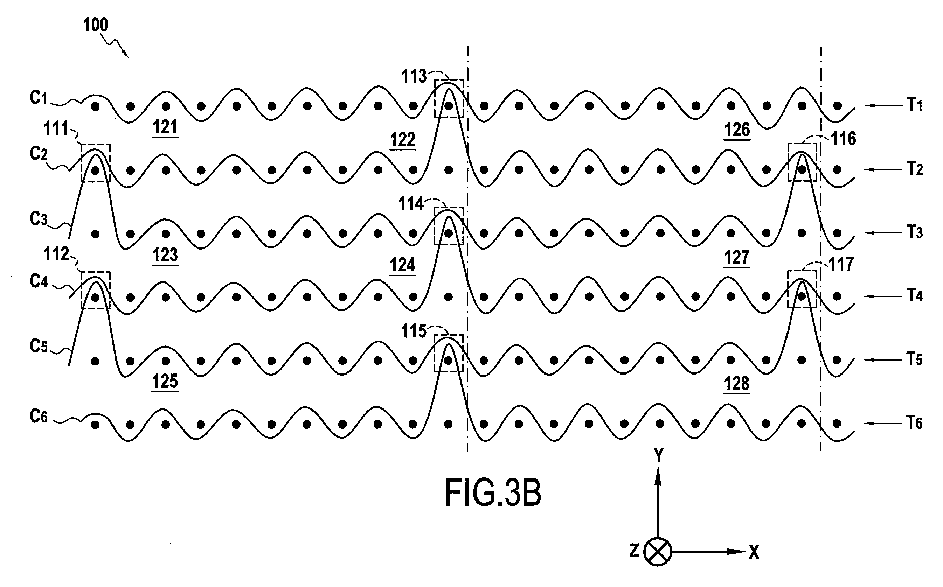

Un mode de tissage multicouche de la structure fibreuse 100 est montré schématiquement par les figures 3A et 3B qui sont respectivement des vues agrandies de deux plans successifs d'une armure de tissage de type multi-toile, les fils de trame étant visibles en coupe. Dans cet exemple, la structure 100 comprend 6 couches de fils de trame T1 à T6 s'étendant dans la direction Z correspondant à l'axe des cellules de la structure alvéolaire (figure 1). Sur les figures 3A et 3B, chaque couche de fils de trame est liée par des fils de chaîne C1 à C6 appartenant chacun respectivement à une couche de fils de chaîne. L'épaisseur de la structure fibreuse et, par conséquent la hauteur des cellules formées ultérieurement par déploiement de la structure 100, s'étend suivant la direction Z et est déterminée par la longueur des fils de trame tissés par les fils de chaîne, c'est-à-dire le nombre de répétition des plans des figures 3A et 3B. La longueur et la largeur de la structure 100 sont définies respectivement par le nombre de fils de trame par couche (direction X) et par le nombre de couches de fils de trame tissées (direction Y).

Par souci de simplification, 6 couches de fils de chaîne et 6 couches de fils de trame sont représentés ici. Bien entendu suivant les dimensions (largeur et épaisseur) de la structure fibreuse que l'on souhaite obtenir, cette dernière pourra être réalisée avec un nombre de couches de fils de chaîne et de trame plus importants, en particulier pour augmenter le nombre de cellules dans la direction Y de la structure fibreuse. Toujours par souci de concision, seuls 22 fils de trame sont représentés ici de manière à montrer la réalisation de deux cellules adjacentes en forme de losange comme représentées sur la figure 3A. Bien entendu, le nombre de fils de trame par couche peut être plus important afin d'augmenter la taille des cellules dans la direction X de la structure fibreuse.

Des portions de liaison 111 à 117 sont réalisées entre les fils de deux couches de fils de trame adjacentes. Ces portions de liaison délimitent des zones de déliaisons 121 à 128 qui formeront chacune tout ou partie d'une cellule une fois la structure fibreuse déployée.

Une fois réalisée, la structure fibreuse déployable 100 est imprégnée avec une composition liquide contenant un précurseur organique d'un matériau déterminé, par exemple une céramique. A cet effet, la texture fibreuse est immergée dans un bain contenant la résine et habituellement un solvant de celle-ci. Après égouttage, un séchage est réalisé en étuve. Le séchage doit être réalisé à une température modérée pour préserver une déformabilité suffisante de la texture fibreuse. D'autres techniques connues d'imprégnation peuvent être utilisées telles que passage de la texture fibreuse dans une imprégnatrice en continu, imprégnation par infusion, ou encore imprégnation par RTM ("Resin Transfer Moulding").

Le précurseur organique se présente habituellement sous forme d'un polymère, tel qu'une résine, éventuellement dilué dans un solvant. A titre d'exemple, des précurseurs liquides de céramique (dans le cas d'un matériau composite CMC), notamment de SiC, peuvent être des résines de type polycarbosilane (PCS), polysiloxane (PSX), polytitanocarbosilane (PTCS), ou polysilazane (PSZ).

La structure fibreuse peut ensuite être soumise à un séchage ou un pré-poussage (pré-polymérisation).

A ce stade, la structure fibreuse peut être découpée, par exemple au jet d'eau sous pression ou par laser, afin d'être ajustée à une ou plusieurs dimensions déterminées. La hauteur, la longueur et/ou la largeur de la structure alvéolaire finale peuvent être ainsi ajustées.

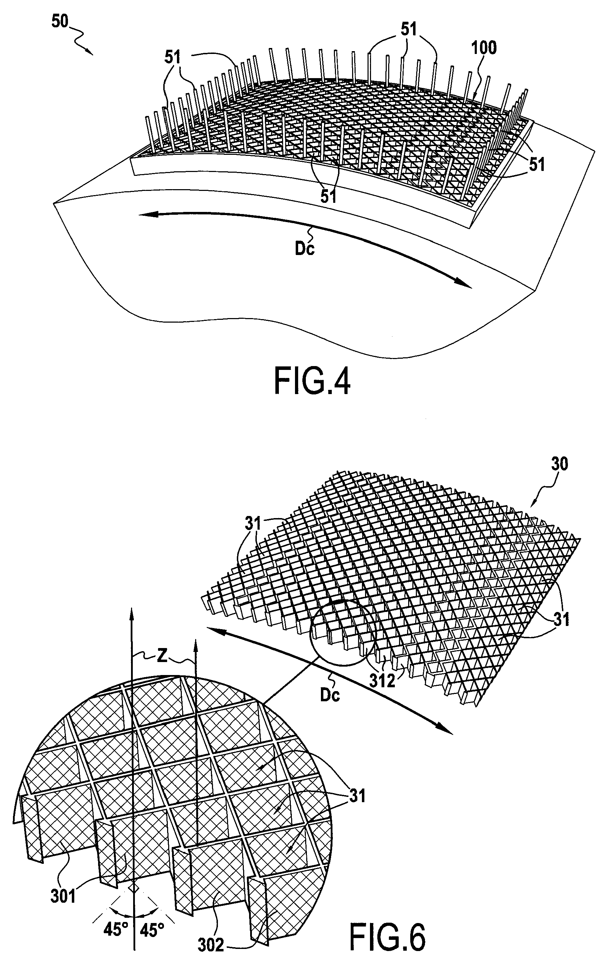

Comme illustrée sur la figure 4, la structure fibreuse 100 imprégnée est ensuite déployée sur un outillage de maintien 50 qui présente une forme courbée correspondant à la forme finale de la structure alvéolaire à fabriquer. Dans l'exemple décrit ici, l'outillage de maintien 50 présente une forme cylindrique et comprend des pions 51 pour maintenir en position la structure 100 sur l'outillage 50.

Après le déploiement et la mise en forme de la structure fibreuse 100 sur l'outillage 50, la résine d'imprégnation de la structure fibreuse 100 est polymérisée afin de lui conférer une certaine tenue mécanique lui permettant de conserver sa mise en forme lors des manipulations. On obtient alors la structure alvéolaire 10 représentée sur la figure 1. Dans le cas où la structure fibreuse 100 a été imprégnée avec une résine précurseur de céramique, la structure alvéolaire peut être soumise, après polymérisation, à un traitement de pyrolyse sous gaz neutre de manière à transformer la matrice polymère en une céramique.

A ce stade, la structure alvéolaire présente encore une porosité qui peut être réduite à un niveau déterminé par une des techniques bien connue de densification telle qu'une infiltration chimique en voie gazeuse (CVI), une imprégnation de polymère et pyrolyse (PIP), ou une imprégnation d'une barbotine (« slurry cast »), contenant par exemple du SiC et des liants organiques, suivie d'une infiltration avec du silicium liquide (« Melt infiltration »).

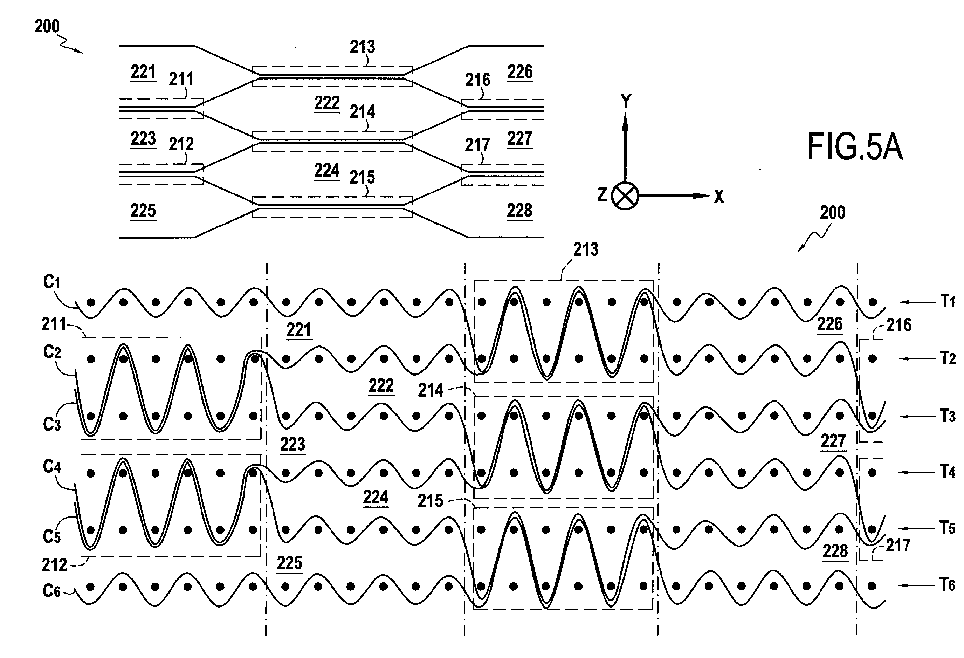

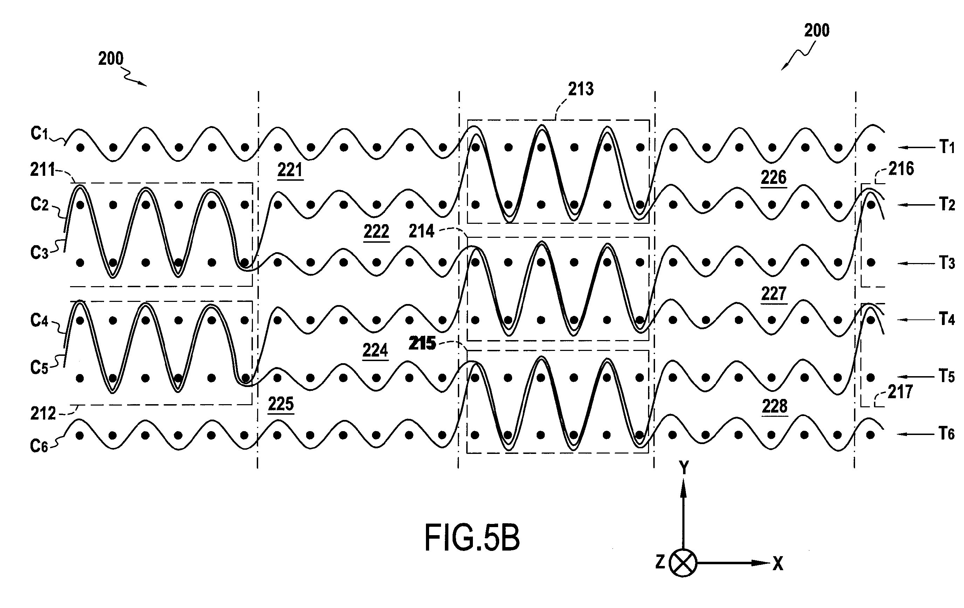

Les figures 5A et 5B sont respectivement des vues agrandies de deux plans successifs d'une armure de tissage permettant de réaliser une structure fibreuse 200 qui, une fois déployée, forme des cellules hexagonales, les fils de trame étant visibles en coupe. Dans cet exemple, la structure 200 comprend 6 couches de fils de trame T1 à T6 s'étendant dans la direction Z correspondant à l'axe des cellules de la structure alvéolaire. Sur les figures 5A et 5B, chaque couche de fils de trame est liée par des fils de chaîne C1 à C6 appartenant chacun respectivement à une couche de fils de chaîne. De même que pour la structure fibreuse 100 décrite précédemment, l'épaisseur de la structure fibreuse 200 et, par conséquent la hauteur des cellules formées ultérieurement par déploiement de la structure, s'étend suivant la direction Z et est déterminée par la longueur des fils de trame tissés par les fils de chaîne, c'est-à-dire le nombre de répétition des plans des figures 5A et 5B. La longueur et la largeur de la structure 200 sont définies respectivement par le nombre de fils de trame par couche (direction X) et par le nombre de couches de fils de trame tissées (direction Y).

Suivant les dimensions (largeur et épaisseur) de la structure fibreuse que l'on souhaite obtenir, cette dernière pourra être réalisée avec un nombre de couches de fils de chaîne et de trame plus importants, en particulier pour augmenter le nombre de cellules dans la direction Y de la structure fibreuse tandis que le nombre de fils de trame par couche peut être également plus important afin d'augmenter la taille des cellules dans la direction X de la structure fibreuse.

Des portions de liaison 211 à 217 sont réalisées entre les fils de deux couches de fils de trame adjacentes. Ces portions de liaison délimitent des zones de déliaisons 221 à 228 qui formeront chacune une cellule une fois la structure fibreuse déployée.

Les structures fibreuses décrites ci-avant sont tissées avec les fils de trame parallèles à l'axe des cellules (0°) tandis que les fils de chaîne sont perpendiculaires à l'axe des cellules (90°) comme illustré schématiquement sur la figure 1 qui montre des fils de trame 101 parallèles à l'axe Z des cellules 11 et des fils de chaîne 102 perpendiculaires à l'axe Z des cellules 11. Toutefois, les fils de trame et de chaîne peuvent être orientés différemment par rapport à l'axe des cellules. Lorsque l'on souhaite avoir une orientation des fils de trame et des fils de chaîne différente par rapport à l'axe des cellules, c'est-à-dire des fils de trames non parallèles à l'axe des cellules et des fils de chaîne non perpendiculaires à l'axe des cellules, on décale les portions de liaison d'un ou plusieurs fils de trame dans une direction parallèle à celle des couches de fils de trame entre chaque série de plans d'armure, le nombre de fils de trame dont sont décalées les portions de liaison étant fonction de l'angle visé entre les fils et l'axe des cellules.

Selon un exemple particulier, les structures fibreuses peuvent être tissées de manière à ce que les fils de trame et de chaîne soient orientées à 45° par rapport à l'axe des cellules, ce qui permet une déformation plus importante de la structure fibreuse lors de son déploiement favorisant ainsi une bonne mise en forme sur une surface gauche. Une telle orientation est représentée schématiquement sur la figure 6 qui montre des cellules 31 d'une structure alvéolaire 30 dont les parois comportent des fils de trame 301 et des fils de chaîne 302 orientés à 45° par rapport à l'axe des cellules 30.

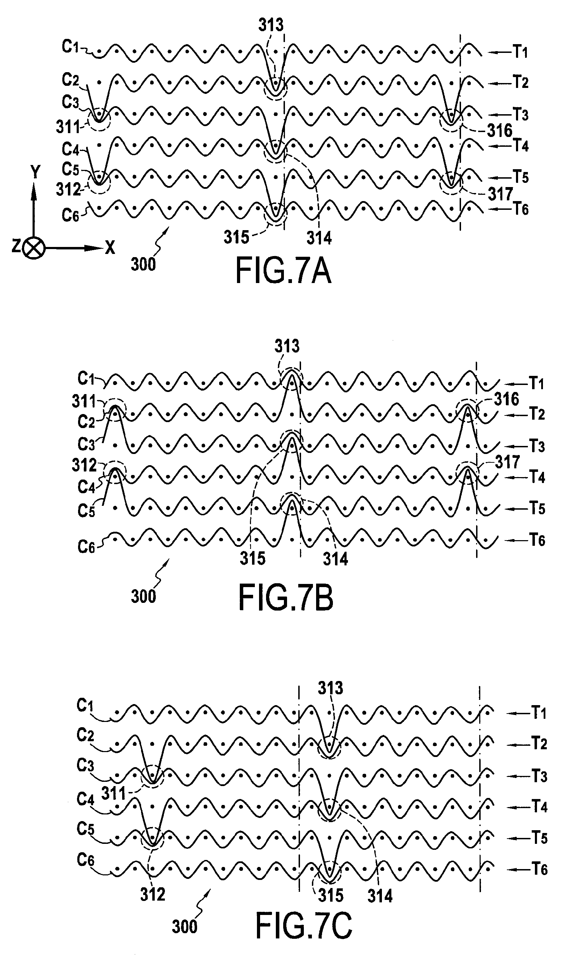

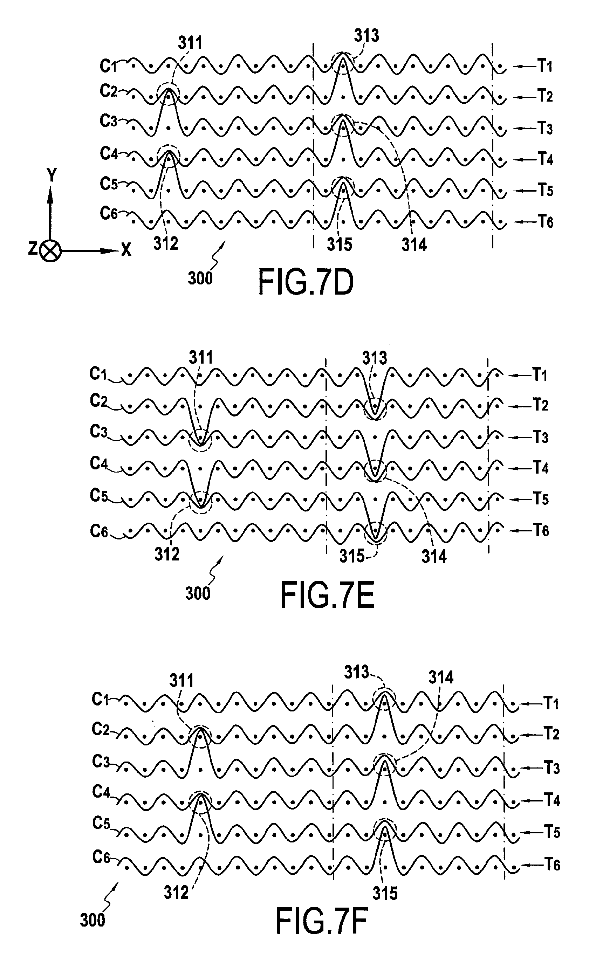

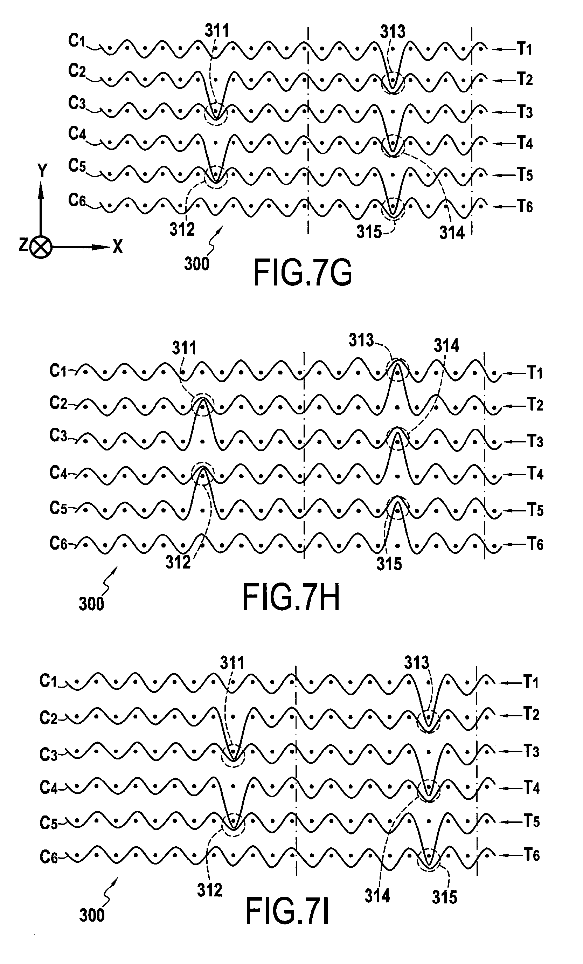

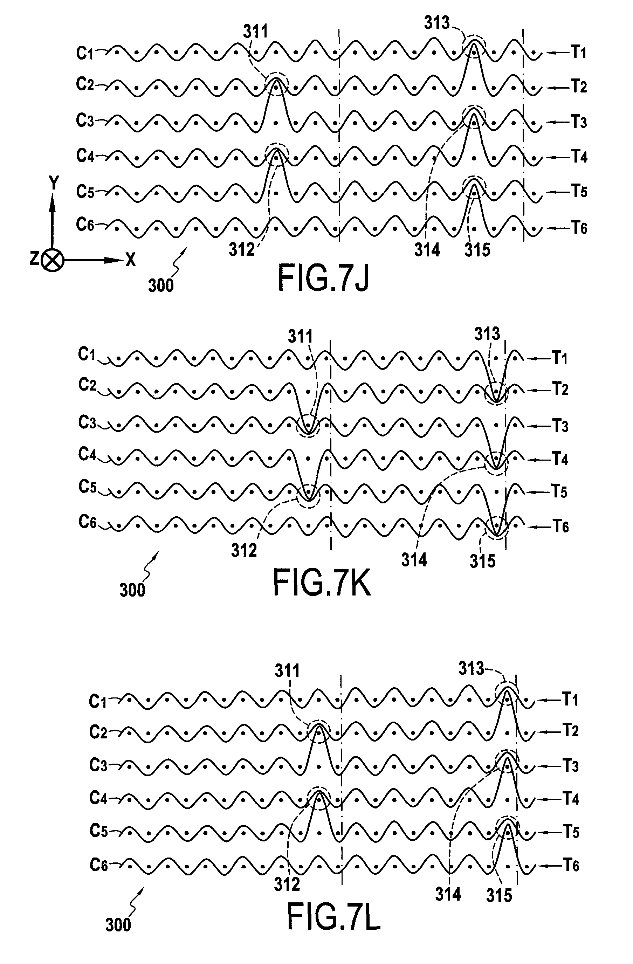

Les figures 7A à 7L montrent des plans d'armure permettant de réaliser une structure fibreuse 300 du même type que la structure 100 déjà décrite, c'est-à-dire une structure fibreuse permettant de former des cellules en losange, mais dont les fils de trame et de chaîne sont orientés à 45° par rapport à l'axe de chaque cellule. Le tissage de la structure fibreuse 300 diffère de celui de la structure 100 en ce qu'on décale les portions de liaison de deux fils de trame tous les deux plans, ici de deux fils de trame, comme illustré pour les portions de liaison 311 à 317 entre les figures 7A et 7C, 7B et 7D, 7C et 7E, etc..

La structure fibreuse destinée à former le renfort de la structure alvéolaire selon l'invention peut être également réalisée par tissage multicouche ou 3D de type interlock. Par "tissage interlock", on entend ici une armure de tissage multicouche ou 3D dont chaque couche de chaîne lie plusieurs couches de trame avec tous les fils de la même colonne de chaîne ayant le même mouvement dans le plan de l'armure avec croisement de fils de chaîne dans les couches de trame.

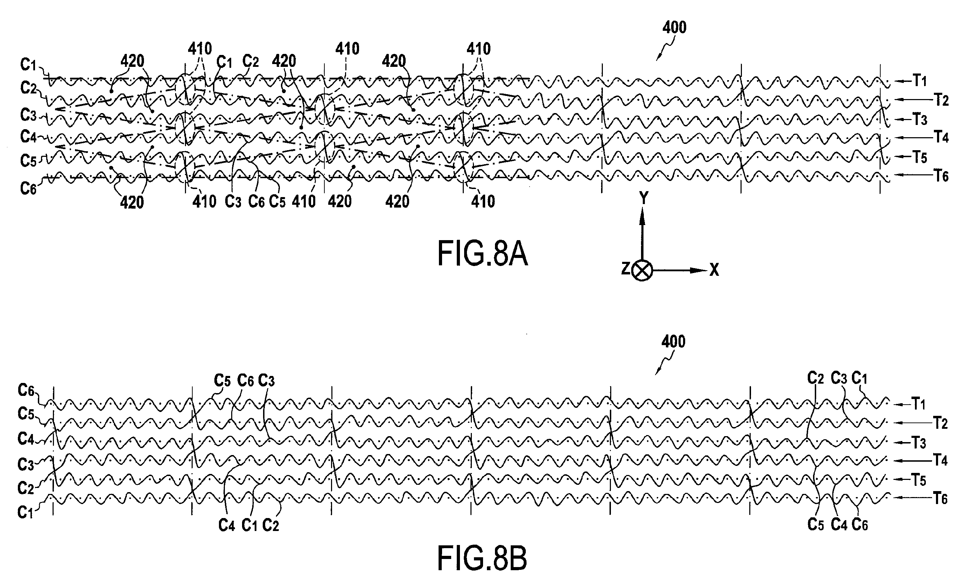

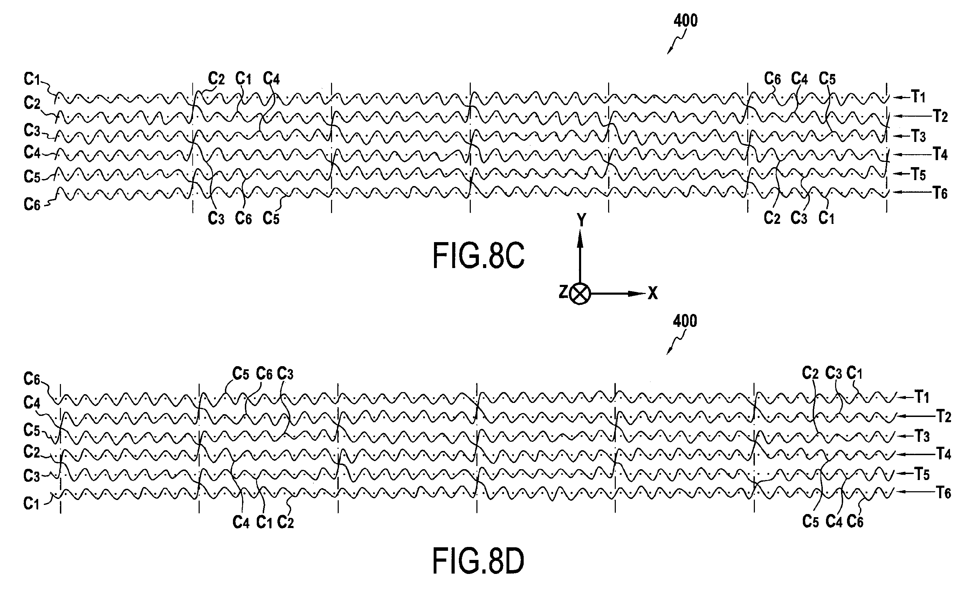

Les figures 8A à 8D représentent des vues partielles de deux plans successifs (deux demi-plans d'un premier plan sur les figures 8A et 8B et deux demi-plans du deuxième plan suivant sur les figures 8C et 8D) d'une armure d'une structure fibreuse déployable 400 permettant de former des cellules en losange, la structure étant obtenue par tissage 3D interlock, les fils de trame étant visibles en coupe. Dans l'exemple décrit ici, la structure 400 comprend 6 couches de fils de trame T1 à T6 avec 168 fils de trame par couche s'étendant dans la direction Z correspondant à l'axe des cellules de la structure alvéolaire. Sur les figures 8A à 8D, chaque couche de fils de trame est traversée au moins une fois par des fils de chaîne C1 à C6 appartenant chacun à une couche de fils de chaîne. Des portions de liaison 410 sont réalisées entre les fils de deux couches de fils de trame adjacentes. Ces portions de liaison délimitent des zones de déliaisons 420 qui formeront chacune une cellule une fois la structure fibreuse déployée.

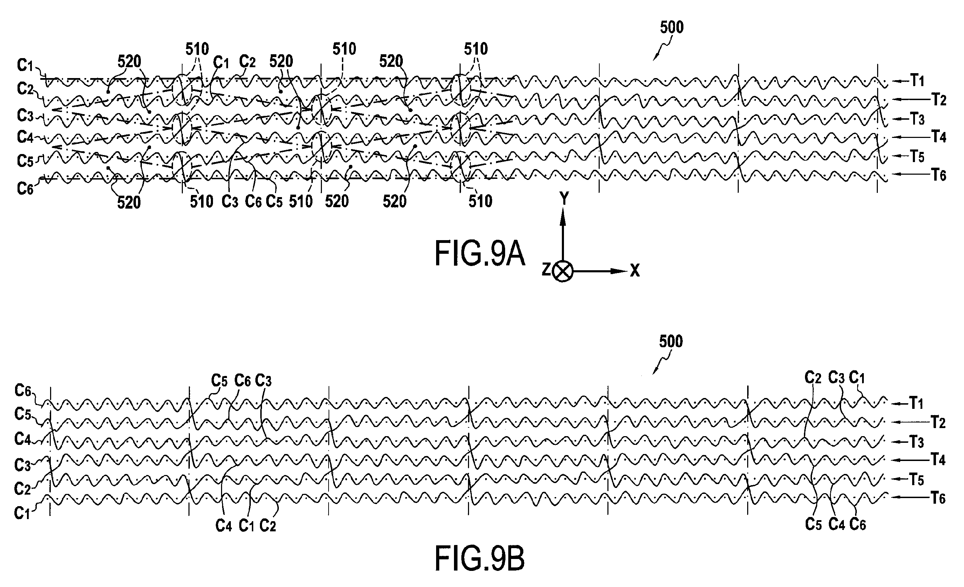

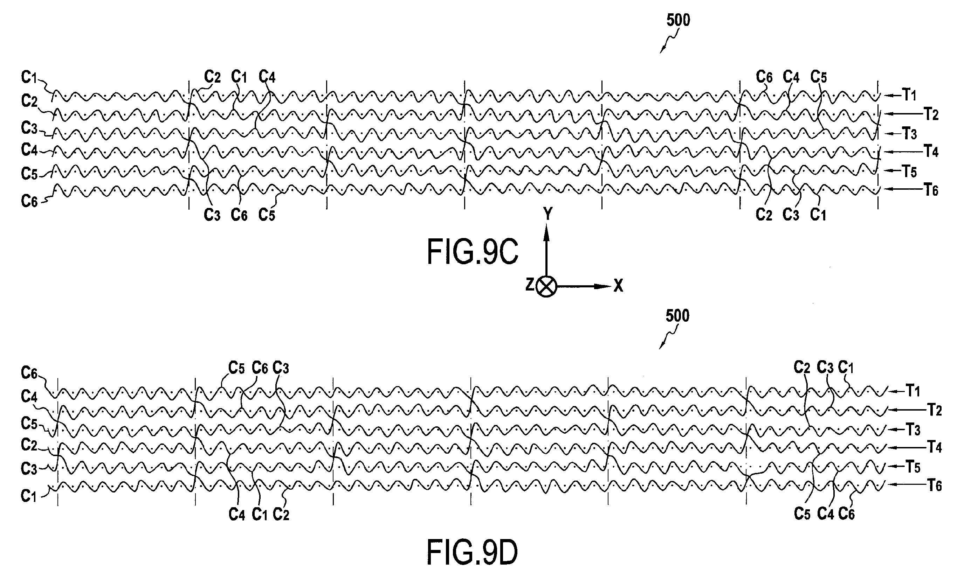

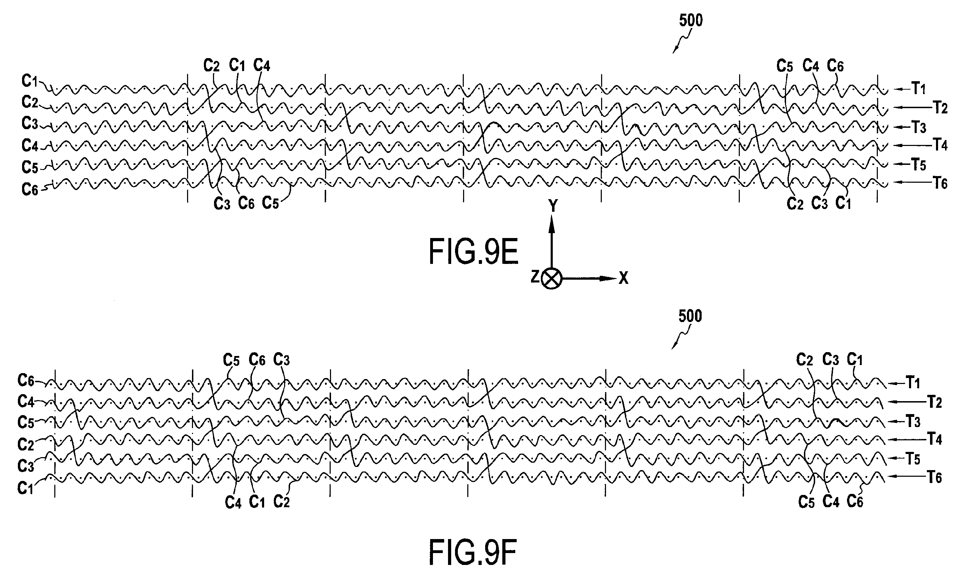

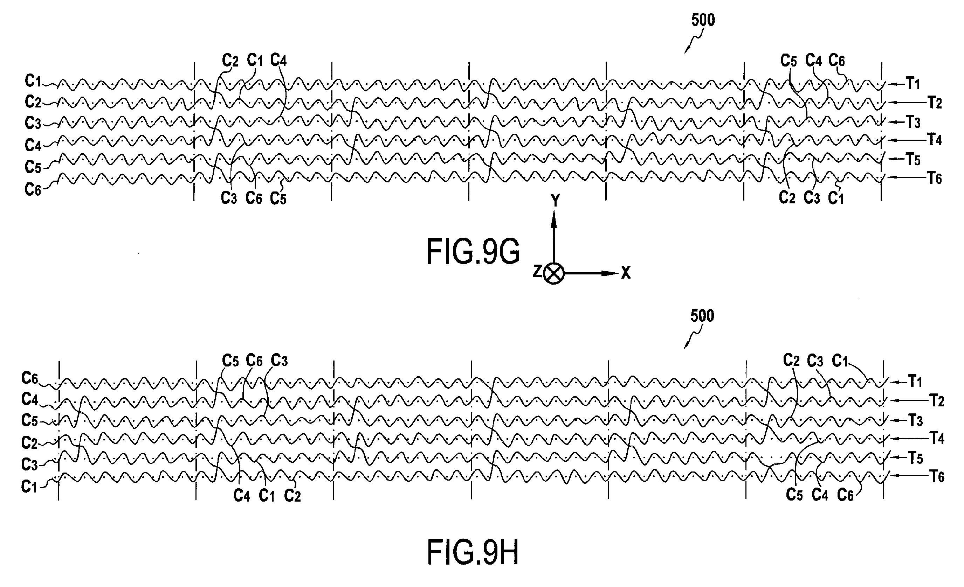

La structure fibreuse 400 est tissée avec les fils de trame parallèles à l'axe des cellules (0°) tandis que les fils de chaîne sont perpendiculaires à l'axe des cellules (90°). Les figures 9A à 9H représentent des vues partielles de quatre plans d'armure successifs (deux demi-plans d'un premier plan sur les figures 9A et 9B, deux demi-plans du deuxième plan suivant sur les figures 9C et 9D, et ainsi de suite) permettant de réaliser une structure fibreuse 500 du même type que la structure 400 déjà décrite, c'est-à-dire une structure fibreuse permettant de former des cellules en losange, mais dont les fils de trame et de chaîne sont orientés à 45° par rapport à l'axe de chaque cellule. Le tissage de la structure fibreuse 500 diffère de celui de la structure 400 en ce qu'on décale les portions de liaison de deux fils de trame tous les deux plans, comme illustré pour les portions de liaison 510 entre les figures 9A et 9E, 9B et 9F, 9C et 9G, etc..

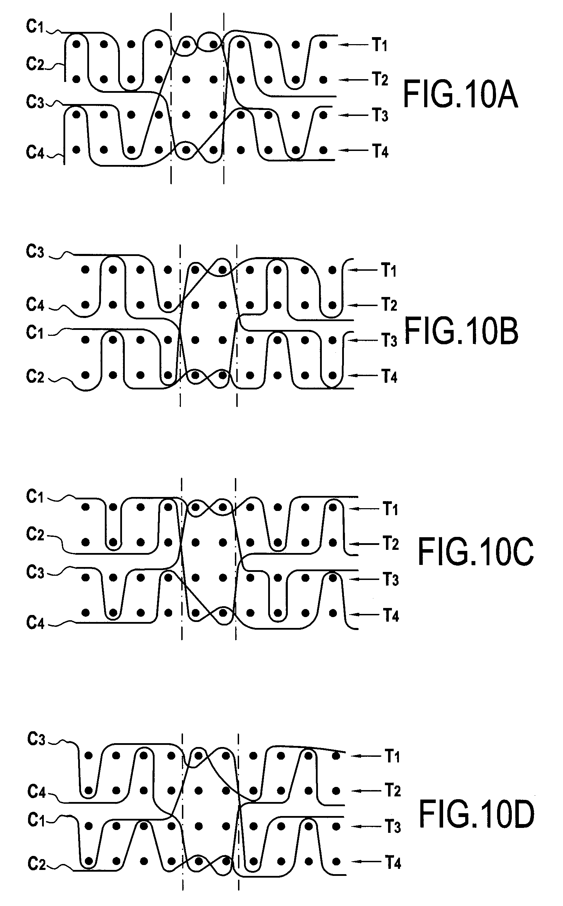

Selon un autre aspect de l'invention, l'épaisseur des parois des cellules de la structure alvéolaire peut être ajustée en fonction du nombre de couches de fils de trame utilisées pour former les parois des cellules. Dans les exemples de tissage de structures fibreuses déployables décrits ci-avant, on utilise une seule couche de fils de trame pour former les parois des cellules (sauf pour les parois formés par les portions de liaison sur les figures 5A et 5B). Les figures 10A à 10D sont des vues partielles agrandies de quatre plans successifs d'une armure de tissage (les fils de trame étant visibles en coupe) permettant de former une structure fibreuse déployable avec des cellules en losange et dont les parois sont constituées par deux couches de fils de chaîne et deux couches de fils de trame adjacentes, ici les couches T1/T2 et T3/T4 liées entre elles par des fils de chaîne C1 à C4.

La structure alvéolaire selon l'invention peut être notamment utilisée pour la réalisation de panneau d'atténuation acoustique. Dans ce cas, la structure alvéolaire est généralement disposée entre une peau structurale et une peau acoustique multiperforée. La géométrie et les dimensions de ces éléments sont définies en fonction de la pièce sur laquelle le panneau doit être monté.

Un tel panneau d'atténuation acoustique peut être utilisé d'une manière générale dans tout conduit d'écoulement d'une turbine à gaz. Il peut en particulier équiper différentes parties d'une tuyère d'un moteur aéronautique tel que le conduit d'échappement d'un turboréacteur. Il peut également être utilisé sur la surface interne d'une nacelle de moteur aéronautique afin d'atténuer les ondes sonores se propageant depuis le corps du moteur. Le panneau d'atténuation acoustique de l'invention peut encore être avantageusement utilisé dans des inverseurs de poussée de moteurs aéronautiques notamment au niveau des écopes de tels inverseurs.

La réalisation d'un panneau d'atténuation acoustique en matériau composite à matrice céramique permet d'alléger la masse de la pièce tout en assurant une tenue structurale à haute température (supérieure à 700°C). Dans le cas d'un système d'échappement par exemple, l'utilisation de panneaux d'atténuation acoustique en CMC dans le cône d'échappement et dans la tuyère permet d'intégrer la fonction d'atténuation acoustique dans les arrière-corps de moteurs aéronautique sans pénaliser la masse du système d'éjection.

La structure fibreuse déployable selon l'invention peut être réalisée directement à l'échelle de la structure alvéolaire à réaliser, c'est-à-dire, par tissage multicouche comme décrit ci-avant d'une structure ayant des dimensions adaptées pour former une seule structure alvéolaire déterminée, les dimensions de la structure fibreuse déployable pouvant être ajustées par des découpes réalisées après l'imprégnation, et éventuellement après séchage ou pré-poussage, de la structure.

Selon une variante de réalisation, on réalise un substrat fibreux de grandes dimensions par tissage multicouche comme décrit ci-avant. Une pluralité de structures fibreuses déployables destinées à former chacune une structure alvéolaire sont alors découpées après l'imprégnation, et éventuellement après séchage ou pré-poussage, du substrat fibreux sous forme de bandes dans le substrat fibreux, chaque bande étant notamment découpée avec une largeur déterminée correspondant à la hauteur des cellules à réaliser.

## Revendications

1. Procédé de fabrication d'une structure alvéolaire courbée (10) comprenant les étapes suivantes :
- la réalisation d'une structure fibreuse déployable (100) comportant des zones de déliaison (110) s'étendant dans l'épaisseur de la structure fibreuse (100), les zones de déliaison (110) étant espacées les unes des autres par des portions de liaison,
- l'imprégnation de la structure fibreuse (100) avec une résine précurseur d'un matériau déterminé,
- le déploiement de la structure fibreuse (100) sur un outillage de maintien (50) de manière à former dans la structure fibreuse une cellule ou alvéole au niveau de chaque zone de déliaison (110), l'outillage présentant en outre une forme courbée correspondant à la forme de la structure alvéolaire (10) à fabriquer,
- la polymérisation de la résine de la structure fibreuse de manière à former une structure alvéolaire courbée (10) comprenant une pluralité de cellules ou alvéoles (11).
**caractérisé en ce que** la structure fibreuse (100) est réalisée par tissage multicouche entre une pluralité de couches de fils de chaîne et une pluralité de couches de fils de trame, avec répétition d'une série de plans d'armure successifs comprenant chacun des portions de liaison (311-317) dans lesquelles au moins un fil de chaîne lie entre eux des fils de trame d'au moins deux couches de fils de trame adjacentes et **en ce que** les portions de liaison (311-317) sont décalées d'un ou plusieurs fils de trame dans une direction parallèle à celle des couches de fils de trame entre chaque série de plans d'armure.

2. Procédé selon la revendication 1, **caractérisé en ce que** la structure fibreuse est tissée en répétant une série de deux plans d'armure successifs comprenant chacun des portions de liaison (311-317) dans lesquelles au moins un fil de chaîne lie entre eux des fils de trame d'au moins deux couches de fils de trame adjacentes et **en ce que** les portions de liaison (311-317) sont décalées de deux fils de trame dans une direction parallèle à celle des couches de fils de trame entre chaque série de plans d'armure de manière à orienter les fils de couches de chaîne et les fils de couches de trame dans une direction formant un angle de 45° avec l'axe de chaque cellule.

3. Procédé selon la revendication 1 ou 2, **caractérisé en ce que** la structure fibreuse est réalisée par tissage tridimensionnel ou multicouche à armure interlock.

4. Procédé selon l'une quelconque des revendications 1 à 3, **caractérisé en ce que** l'épaisseur des parois (12) des cellules ou alvéoles (11) de la structure alvéolaire (10) à fabriquer est ajustée en fonction du nombre de couches de fils de trame tissées dans les portions de liaison.

5. Procédé selon l'une quelconque des revendications 1 à 4, **caractérisé en ce que** la structure fibreuse (100) est réalisée à partir de fibres de carbure de silicium.

6. Procédé selon la revendication 5, **caractérisé en ce que** la résine utilisée pour l'imprégnation de la structure fibreuse (100) est une résine précurseur de céramique.

7. Procédé selon la revendication 6, **caractérisé en ce qu'**il comprend en outre une étape de pyrolyse de la résine pour transformer ladite résine en céramique.

8. Procédé selon la revendication 7, **caractérisé en ce qu'**il comprend en outre une étape de densification de la structure alvéolaire (10).

9. Procédé selon l'une quelconque des revendications 1 à 8, **caractérisé en ce qu'**il comprend, après l'étape d'imprégnation et avant les étapes de déploiement et de polymérisation de la structure fibreuse (100), une étape de découpe de ladite structure fibreuse à une ou plusieurs dimensions déterminées de la structure alvéolaire.

10. Procédé selon l'une quelconque des revendications 1 à 8, **caractérisé en ce qu'**il comprend une étape de réalisation d'un substrat fibreux par tissage multicouche entre une pluralité de couches de fils de chaîne et une pluralité de couches de fils de trame, le substrat fibreux comportant des zones de déliaison s'étendant dans l'épaisseur du substrat, les zones de déliaison étant espacées les unes des autres par des portions de liaison entre plusieurs couches de fils de trame, le procédé comprenant en outre, après une étape d'imprégnation du substrat fibreux avec une résine précurseur d'un matériau déterminé, une étape de découpe d'au moins une bande dans ledit substrat fibreux de manière à obtenir ladite structure fibreuse déployable, chaque bande étant découpée avec une largeur déterminée correspondant à la hauteur des cellules à réaliser.

## Patentansprüche

1. Verfahren zur Herstellung einer gekrümmten Wabenstruktur (10), umfassend die folgenden Schritte:
- die Ausbildung einer entfaltbaren Faserstruktur (100) mit Losbindungsbereichen (110), die sich in der Dicke der Faserstruktur (100) erstrecken, wobei die Losbindungsbereiche (110) durch Verbindungsabschnitte voneinander beabstandet sind,
- das Imprägnieren der Faserstruktur (100) mit einem Vorläuferharz eines bestimmten Materials,
- das Entfalten der Faserstruktur (100) auf einem Haltegerät (50), um in der Faserstruktur eine Zelle oder Wabe im Bereich eines jeden Losbindungsbereiches (110) zu bilden, wobei das Gerät ferner eine der Form der herzustellenden Wabenstruktur (10) entsprechende gekrümmte Form aufweist,
- die Polymerisation des Harzes der Faserstruktur, um eine gekrümmte Wabenstruktur (10) mit einer Vielzahl von Zellen oder Waben (11) zu bilden,
**dadurch gekennzeichnet, dass** die Faserstruktur (100) durch Mehrlagenweben zwischen einer Vielzahl von Kettfadenlagen und einer Vielzahl von Schussfadenlagen, mit Wiederholung einer Reihe von aufeinanderfolgenden Bindungsebenen, die jeweils Verbindungsabschnitte (311-317) aufweisen, in denen wenigstens ein Kettfaden Schussfäden von wenigstens zwei benachbarten Schussfadenlagen untereinander verbindet, hergestellt wird, und dass die Verbindungsabschnitte (311-317) um einen oder mehrere Schussfäden in einer Richtung parallel zu derjenigen der Schussfadenlagen zwischen jeder Reihe von Bindungsebenen versetzt sind.

2. Verfahren nach Anspruch 1, **dadurch gekennzeichnet, dass** die Faserstruktur durch Wiederholen einer Reihe von zwei aufeinanderfolgenden Bindungsebenen, die jeweils Verbindungsabschnitte (311-317) umfassen, in denen wenigstens ein Kettfaden Schussfäden von wenigstens zwei benachbarten Schussfadenlagen untereinander verbindet, gewebt ist, und dass die Verbindungsabschnitte (311-317) um zwei Schussfäden in einer Richtung parallel zu derjenigen der Schussfadenlagen zwischen jeder Reihe von Bindungsebenen versetzt sind, so dass die Fäden von Kettlagen und die Fäden von Schusslagen in einer Richtung, die mit der Achse einer jeden Zelle einen Winkel von 45° bildet, ausgerichtet werden.

3. Verfahren nach Anspruch 1 oder 2, **dadurch gekennzeichnet, dass** die Faserstruktur durch dreidimensionales oder Mehrlagenweben mit Interlockbindung hergestellt ist.

4. Verfahren nach einem der Ansprüche 1 bis 3, **dadurch gekennzeichnet, dass** die Dicke der Wände (12) der Zellen oder Waben (11) der herzustellenden Wabenstruktur (10) in Abhängigkeit von der Anzahl von gewebten Schussfadenlagen in den Verbindungsabschnitten eingestellt wird.

5. Verfahren nach einem der Ansprüche 1 bis 4, **dadurch gekennzeichnet, dass** die Faserstruktur (100) aus Siliziumkarbidfasern gefertigt ist.

6. Verfahren nach Anspruch 5, **dadurch gekennzeichnet, dass** das für die Imprägnierung der Faserstruktur (100) verwendete Harz ein Vorläuferharz von Keramik ist.

7. Verfahren nach Anspruch 6, **dadurch gekennzeichnet, dass** es ferner einen Schritt zur Pyrolyse des Harzes umfasst, um das Harz in Keramik umzuwandeln.

8. Verfahren nach Anspruch 7, **dadurch gekennzeichnet, dass** es ferner einen Schritt zur Verdichtung der Wabenstruktur (10) umfasst.

9. Verfahren nach einem der Ansprüche 1 bis 8, **dadurch gekennzeichnet, dass** es nach dem Imprägnierungsschritt und vor den Schritten der Entfaltung und Polymerisation der Faserstruktur (100) einen Schritt zum Zuschneiden der Faserstruktur auf eine oder mehrere bestimmte Abmessungen der Wabenstruktur umfasst.

10. Verfahren nach einem der Ansprüche 1 bis 8, **dadurch gekennzeichnet, dass** es einen Schritt zum Ausbilden eines Fasersubstrats durch Mehrlagenweben zwischen einer Vielzahl von Kettfadenlagen und einer Vielzahl von Schussfadenlagen umfasst, wobei das Fasersubstrat Losbindungsbereiche umfasst, die sich in der Dicke des Substrats erstrecken, wobei die Losbindungsbereiche durch Verbindungsabschnitte zwischen mehreren Schussfadenlagen voneinander beabstandet sind, wobei das Verfahren ferner nach einem Schritt zur Imprägnierung des Fasersubstrats mit einem Vorläuferharz eines bestimmten Materials einen Schritt zum Ausschneiden wenigstens eines Streifens aus dem Fasersubstrat umfasst, um die entfaltbare Faserstruktur zu erhalten, wobei jeder Streifen mit einer bestimmten Breite, welche der Höhe der auszubildenden Zellen entspricht, ausgeschnitten wird.

## Claims

1. A method of fabricating a curved cellular structure (10), the method comprising the following steps:
· making an expandable fiber structure (100) having zones (110) of non-interlinking extending in the thickness of the fiber structure (100), the zones (110) of non-interlinking being spaced apart from one another by portions of interlinking;
· impregnating the fiber structure (100) with a resin that is a precursor for a determined material;
· expanding the fiber structure (100) on support tooling (50) so as to form a cell in the fiber structure at each zone (110) of non-interlinking, the tooling also presenting a curved shape corresponding to the shape of the cellular structure (10) that is to be fabricated; and
· polymerizing the resin of the fiber structure so as to form a curved cellular structure (10) having a plurality of cells (11);
the method being **characterized in that** the fiber structure (100) is made by multilayer weaving between a plurality of layers of warp yarns and a plurality of layers of weft yarns, repeating a series of successive weave planes, each having portions (311-317) of interlinking in which at least one warp yarn interlinks weft yarns from at least two adjacent layers of weft yarns, and **in that** the portions (311-317) of interlinking are offset by one or more weft yarns in a direction parallel to the layers of weft yarns between each series of weave planes.

2. A method according to claim 1, **characterized in that** the fiber structure is woven by repeating a series of two successive weave planes, each having interlinking portions (311-317) in which at least one warp yarn interlinks weft yarns of at least two adjacent layers of weft yarns, and **in that** the interlinking portions (311-317) are offset by two weft yarns in a direction parallel to the direction of the layers of weft yarns between each series of weave planes so as to orient the yarns of the warp layers and the yarns of the weft layers in a direction forming an angle of 45° relative to the axis of each cell.

3. A method according to claim 1 or claim 2, **characterized in that** the fiber structure is made by three-dimensional weaving by multilayer interlock weaving.

4. A method according to any one of claims 1 to 3, **characterized in that** the thickness of the walls (12) of the cells (11) of the cellular structure (10) that is to be fabricated is adjusted as a function of the number of layers of warp yarns woven in the interlinking portions.

5. A method according to any one of claims 1 to 4, **characterized in that** the fiber structure (100) is made of silicon carbide fibers.

6. A method according to claim 5, **characterized in that** the resin used for impregnating the fiber structure (100) is a ceramic-precursor resin.

7. A method according to claim 6, **characterized in that** it further includes a step of pyrolyzing the resin in order to transform said resin into ceramic.

8. A method according to claim 7, **characterized in that** it further includes a step of densifying the cellular structure (10).

9. A method according to any one of claims 1 to 8, **characterized in that**, after the impregnation step and before the step of expanding and polymerizing the fiber structure (100), it includes a step of cutting said fiber structure to one or more determined dimensions of the cellular structure.

10. A method according to any one of claims 1 to 8, **characterized in that** it includes a step of making a fiber structure by multilayer weaving between a plurality of layers of warp yarns and a plurality of layers of weft yarns, the fiber structure having zones of non-interlinking extending in the thickness of the substrate, the zones of non-interlinking being spaced apart from one another by portions of interlinking between a plurality of layers of weft yarns, the method further including, after a step of impregnating the fiber structure with a resin that is a precursor for a determined material, a step of cutting at least one strip from said fiber structure so as to obtain said expandable fiber structure, each strip being cut out with a determined width corresponding to the height of the cells to be made.
